# EUROPÄISCHE PATENTSCHRIFT

(11) **EP 1 662 353 B1**
(45) Veröffentlichungstag und Bekanntmachung des Hinweises auf die Patenterteilung: **02.05.2007**
(21) Anmeldenummer: 04292783.0
(22) Anmeldetag: 25.11.2004
(51) Int. Cl.: G05D 1/02, G01D 5/244, G01P 13/04

(54) **Verfahren und Vorrichtung zur Fahrtrichtungserkennung**
Method and device for recognition of the direction of travel
Procédure et dispositif à la reconnaissance de direction de voyage

(43) Veröffentlichungstag der Anmeldung: 31.05.2006
(73) Patentinhaber: Alcatel Lucent, 75008 Paris (FR)
(72) Erfinder: Gebert, Thomas, 74626 Bretzfeld (DE); Lauterberg, Veit, 70736 Fellbach-Oeffingen (DE)
(74) Vertreter: Schmidt, Werner Karl

(56) Entgegenhaltungen:
- DE-A1- 2 820 160
- DE-A1- 19 640 760
- SU-A1- 506 888
- US-A- 5 233 292

## Beschreibung

Die Erfindung betrifft ein Verfahren und eine Vorrichtung zur Fahrtrichtungserkennung.

### Stand der Technik

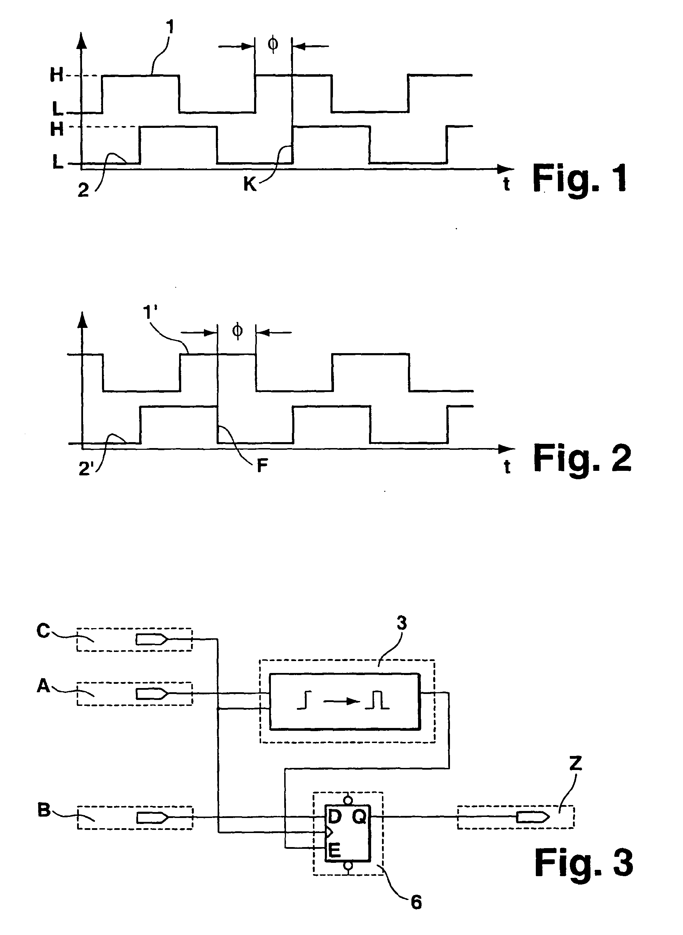

Es ist bekannt, zur Fahrtrichtungserkennung Impulsgeber einzusetzen, die zwei oder mehr Spuren/Systeme mit gleichartiger Kodierung und einem festen Phasenversatz zueinander aufweisen. Der Impulsgebertyp (optischer Wegimpulsgeber, Hallgeber ...) ist hierbei unerheblich, sofern der Impulsgeber für jedes System ein Rechtecksignal mit zwei Pegeln erzeugt und Rechtecksignale der Systeme einen festen Phasenversatz zueinander aufweisen. In Abhängigkeit vom Phasenversatz kann in diesem Fall eine Fahrtrichtung bestimmt werden, was im Folgenden anhand von **Fig. 1** erläutert wird.

Fig. 1 zeigt die Amplitude eines ersten periodischen Rechtecksignals **1**, über der Zeit, das zwischen einem **H**-Pegel und einem **L**-Pegel hin und her springt, sowie ein zweites, identisches Rechtecksignal **2**, welches einen Phasenversatz φ zum ersten Rechtecksignal 1 aufweist. Die Rechtecksignale 1, 2 sind bei konstanter Geschwindigkeit aufgenommen und können z.B. von einem Impulsgeber mit zwei Systemen mit identischer Impulszahl pro Umdrehung erzeugt werden. Als Wegimpuls gilt der maximale Abstand zwischen zwei aufeinander folgenden steigenden Flanken **K** eines Rechtecksignals 1, 2. In Fig. 1 ist der Phasenversatz φ=90° und die Wegimpulse besitzen ein Tastverhältnis (Verhältnis der Zeitdauer des H-Pegels zu der des L-Pegels) von 1. Das erste Rechtecksignal 1 eilt dem zweiten Rechtecksignal 2 voraus, was sich daran ablesen lässt, dass bei der ansteigenden Flanke K des zweiten Rechtecksignals 2 das erste Rechtecksignal 1 einen H-Pegel aufweist. Das Vorauseilen des ersten Rechtecksignals 1 vor dem zweiten Rechtecksignal 2 wird als Fahrtrichtung "0" erkannt.

Wenn die umgekehrte Fahrtrichtung "1" vorliegt, eilt das zweite Rechtecksignal 2 dem ersten Rechtecksignal 1 voraus. In diesem Fall weist bei ansteigender Flanke K des zweiten Rechtecksignals 2 das erste Rechtecksignal 1 einen L-Pegel auf.

Die Fahrtrichtung kann bei einem Impulsgeber mit zwei Systemen und einem Phasenversatz φ zwischen den Rechtecksignalen 1, 2 der Systeme somit dadurch ermittelt werden, dass immer bei einer ansteigenden Flanke K des zweiten Systems der Pegel des ersten Systems ermittelt wird. Dieses Prinzip wird in einer einfachen Fahrtrichtungserkennungsschaltung verwendet, wie sie in **Fig. 3** gezeigt ist.

Fig. 3 zeigt ein Schaltungsbeispiel eine FPGA-Entwurfs, welcher synchron mit einem Takt getaktet wird, der von einem nicht gezeigten Taktgeber erzeugt wird und an einem Takteingang **C** anliegt. Das erste und zweite Rechtecksignal 1, 2 von Fig. 1 liegen an einem ersten und zweiten Signaleingang **A, B** an. Ein Pegelerzeuger **3** erzeugt aus einer steigenden Flanke K des Rechtecksignals des Signaleingangs A, welches an einem Dateneingang des Pegelerzeugers 3 anliegt, für die Zeit eines Takts einen H-Pegel an einem Datenausgang des Pegelerzeugers 3. Dieser H-Pegel wird über eine Verbindungsleitung an einen Kontrolleingang **E** eines D-Flip-Flops **6** übertragen und führt dazu, dass der am Dateneingang **D** des D-Flip-Flops 6 anliegende Pegel im D-Flip-Flop 6 gespeichert wird und über den Datenausgang Q des D-Flip-Flops 6 an einem Signalausgang **Z** zur Verfügung steht. Der Dateneingang D des D-Flip-Flops 6 ist mit dem zweiten Signaleingang B verbunden, sodass bei jeder aufsteigenden Flanke K des Rechtecksignals 1 am ersten Signaleingang A der Pegel des Rechtecksignals am zweiten Signaleingang B an den Signalausgang Z übertragen wird. Dieser Pegel am Signalausgang Z entspricht der Fahrtrichtung "0" bzw. "1".

### Aufgabe der Erfindung

Es ist die Aufgabe der Erfindung, ein Verfahren und eine Vorrichtung zur Fahrtrichtungserkennung bereitzustellen, mittels derer die Fahrtrichtung möglichst schnell ermittelt werden kann.

### Gegenstand der Erfindung

Erfindungsgemäß wird diese Aufgabe durch ein Verfahren zur Fahrtrichtungserkennung gelöst, bei dem mindestens zwei Rechtecksignale mit zwei Pegeln und von der Fahrtrichtung abhängendem Phasenversatz erzeugt werden, wobei bei ansteigenden und abfallenden Pulsflanken jedes Rechtecksignals der Pegel mindestens eines weiteren Rechtecksignals bestimmt wird und aus der Richtung der Pulsflanke und dem Pegel die momentane Fahrtrichtung ermittelt wird.

Der Vorteil dieser Methode liegt darin, dass bereits mit der ersten beliebigen Flanke eines der Rechtecksignale die Fahrtrichtung bekannt ist. Damit ist nach einem Fahrtrichtungswechsel die Fahrtrichtung schnellstmöglich bekannt.

Abhängig von der Kombination aus abfallender oder ansteigender Flanke eines ersten Rechtecksignals und H-Pegel oder L-Pegel eines weiteren Rechtecksignals kann die Fahrtrichtung ermittelt werden. Die Ermittlung kann durch logische Verknüpfung aus Flanken und Pegeln geschehen. Alternativ kann eine Tabelle verwendet werden, welche die Kombinationen von Flanken und Pegeln den zwei möglichen Fahrtrichtungen zuordnet.

Beim Vorhandensein von mehr als zwei Rechtecksignalen kann das Verfahren auf ein oder mehre Paare von Rechtecksignalen angewendet werden, wenn diese einen festen Phasenversatz zueinander aufweisen. Es ist alternativ auch möglich, bei Auftreten einer Flanke Pegel von mehr als einem weiteren Rechtecksignal zu messen und diese zur Ermittlung der Fahrtrichtung heranzuziehen.

Bei einer bevorzugten Variante des Verfahrens liegt für einen Phasenversatz φ zwischen zwei Rechtecksignalen in einem Intervall 0°< φ <180° das Tastverhältnis T der Rechtecksignale in einem Intervall φ/(360°-φ)< T <(360°-φ)/φ. In diesem Fall lässt sich das Verfahren besonders vorteilhaft durchführen.

Die Aufgabe wird auch gelöst durch eine erfindungsgemäße Vorrichtung zur Fahrtrichtungserkennung, welche insbesondere zur Durchführung des erfindungsgemäßen Verfahrens eingesetzt werden kann, und welche umfasst: mindestens zwei Signaleingänge für Rechtecksignale mit zwei Pegeln und von der Fahrtrichtung abhängendem Phasenversatz, eine Signalverarbeitungseinrichtung zur Verarbeitung des Rechtecksignals für jeden Signaleingang, jeweils eine Pulsflankenverarbeitungseinrichtung zur Verarbeitung einer ansteigenden und einer abfallenden Pulsflanke des Rechtecksignals für jeden Signaleingang sowie eine Auswerteeinrichtung zur Bestimmung der momentanen Fahrtrichtung aus der Richtung der Pulsflanke eines Rechtecksignals eines Signaleingangs und dem zum Zeitpunkt der Pulsflanke vorhandenen Pegel eines Rechtecksignals mindestens eines weiteren Signaleingangs.

Die erfindungsgemäße Vorrichtung dient zur Erkennung der momentanen Fahrtrichtung an jedem Zeitpunkt, an dem eines der Rechtecksignale eine abfallende oder ansteigende Flanke aufweist. Hierdurch ist eine schnellstmögliche Erkennung der Änderung der Fahrtrichtung möglich.

Bei einer bevorzugten Ausführungsform der Vorrichtung ist die Pulsflankenverarbeitungseinrichtung durch einen Pegelerzeuger gebildet, der aus einer abfallenden oder ansteigenden Flanke des Rechtecksignals einen Pegel erzeugt. Die Erzeugung eines Pegels aus der Pulsflanke ermöglicht eine logische Verknüpfung des verarbeiteten Pulsflankensignals mit den Pegeln weiterer Rechtecksignale.

Bei einer bevorzugten Weiterbildung dieser Ausführungsform umfasst die Auswerteeinrichtung für jeden Pegelerzeuger mindestens eine Verknüpfungseinheit, die den Ausgang des Pegelerzeugers und den Ausgang der Signalverarbeitungseinrichtung mindestens eines weiteren Signaleingangs logisch miteinander verknüpft. Durch die logische Verknüpfung kann aus dem vom Pegelerzeuger erzeugten Pegel und dem Ausgangssignal der Signalverarbeitungseinrichtung die Fahrtrichtung ermittelt werden.

Bei einer Weiterbildung ist zwischen der Signalverarbeitungseinrichtung eines Signaleingangs und mindestens einer Verknüpfungseinheit eines Pegelerzeugers mindestens eines weiteren Signaleingangs ein Inverter zur Inversion des Pegels des Signaleingangs angeordnet. Hierdurch kann sichergestellt werden, dass nur ein einziger Typ von Verknüpfungseinheit benötigt wird.

Bei einer weiteren Weiterbildung ist jeder Verknüpfungseinheit eine Fahrtrichtung zugeordnet und die Ausgänge der Verknüpfungseinheiten, denen dieselbe Fahrtrichtung zugeordnet ist, sind mit demselben Eingang einer binären Speichereinheit verbunden. Hierbei können Ausgänge von Verknüpfungseinheiten, denen die Fahrtrichtung "1" zugeordnet ist, beispielsweise mit einem Set-Eingang eines RS-Flip-Flops verbunden sein, Ausgänge von Verknüpfungseinheiten, denen die Fahrtrichtung "0" zugeordnet ist, mit dem Reset-Eingang des RS-Flip-Flops. Hierdurch wird automatisch am Datenausgang des RS-Flip-Flops die korrekte binäre Information über die Fahrtrichtung gespeichert.

Bei einer bevorzugten Weiterbildung werden die Ausgänge der Verknüpfungseinheiten, denen dieselbe Fahrtrichtung zugeordnet ist, in einer Logikeinheit logisch verknüpft und der Ausgang der Logikeinheit ist mit einem Eingang der binären Speichereinheit verbunden. Die Logikeinheit verknüpft die Logiksignale, welche von den Verknüpfungseinheiten geliefert werden, zu einem einzigen Ausgangssignal, welches den Speicherzustand der binären Speichereinheit festlegt.

Bei einer bevorzugten Weiterbildung ist eine Fehlerkorrekturlogik mit einem Kontrolleingang der binären Speichereinheit verbunden, wobei die Fehlerkorrekturlogik im Fehlerfall eine Speicherung der momentanen Fahrtrichtung in der Speichereinheit verhindert. Die Fehlerkorrekturlogik stellt sicher, dass bei einer fehlerhaften Ermittlung der Fahrtrichtung die zuletzt in der Speichereinheit gespeicherte Fahrtrichtung beibehalten wird.

Bei einer besonders bevorzugten Ausführungsform weist die Vorrichtung einen Takteingang zur Taktung mit einer Taktrate auf, die wesentlich größer ist als eine Taktrate der Rechtecksignale. Die Taktrate kann beispielsweise im Bereich von ca. 40 MHz liegen.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ein Ausführungsbeispiel ist in der schematischen Zeichnung dargestellt und wird in der nachfolgenden Beschreibung erläutert. Es zeigt:
- Fig. 1: ein Amplituden-Zeit-Diagramm zweier Rechtecksignale bei einer ersten Fahrtrichtung,
- Fig. 2: ein Amplituden-Zeit-Diagramm zweier Rechtecksignale bei einer zweiten Fahrtrichtung,
- Fig. 3: eine Ausführungsform einer Fahrtrichtungserkennungsschaltung nach dem Stand der Technik,
- Fig. 4: eine Ausführungsform einer erfindungsgemäßen Vorrichtung zur Fahrtrichtungserkennung mit zwei Signaleingängen für Rechtecksignale und jeweils zwei Pegelerzeugern sowie einer Pegelmesseinrichtung für jeden Signaleingang, sowie einer Auswerteeinrichtung und einer binären Speichereinheit,

- Fig. 5: eine Ausführungsform eines Pegelerzeugers zur Erzeugung eines Pegels aus einer ansteigenden Flanke, und
- Fig. 6: eine Ausführungsform eines Pegelerzeugers zur Erzeugung eines Pegels aus einer abfallenden Flanke.

Im Folgenden wird die Fahrtrichtung analog zum in Verbindung mit Fig. 1 geschilderten Verfahren bestimmt, jedoch sowohl bei absteigenden als auch bei ansteigen Flanken eines jeden der Rechtecksignale.

**Fig. 2** zeigt analog zu Fig. 1 die Amplitude eines ersten und zweiten, ein erstes und zweites System eines Impulsgebers repräsentierenden Rechtecksignals **1'**, **2'**, die jeweils zwischen einem H-Pegel und einem L-Pegel hin und her springen und wie in Fig. 1 einen Phasenversatz von φ=90° zueinander aufweisen. Die Ermittlung der Fahrtrichtung geschieht in Fig. 2 an einem abfallenden Pegel F des zweiten Rechtecksignals 2'. Beim Auftreten des abfallenden Pegels F weist das erste Rechtecksignal einen H-Pegel auf. Hieraus kann geschlossen werden, dass das zweite Rechtecksignal 2' dem ersten Rechtecksignal 1' vorauseilt, sodass im Gegensatz zum im Fig. 1 gezeigten Fall in Fig. 2 die Fahrtrichtung "1" vorliegt.

Tabelle 1 zeigt alle möglichen Kombinationen von abfallenden bzw. aufsteigenden Flanken und zugehörigen Pegeln zweier Systeme sowie die daraus ermittelte Fahrtrichtung.

**Tabelle 1:**

| **System 1** | **System 2** | **Fahrtrichtung** |
|---|---|---|
| ↓ | 0 | 0 |
| ↑ | 1 | 1 |
| ↓ | 0 | 1 |
| ↓ | 1 | 0 |
| 0 | ↑ | 1 |
| 1 | ↑ | 0 |
| 0 | ↓ | 0 |
| 1 | ↓ | 1 |

| | | |
|---|---|---|
| ↑ steigende Flanke K ↓ fallende Flanke F | | |
| 0 L-Pegel 1 H-Pegel | | |

Für mehr als zwei Systeme, die eine entsprechende Anzahl von Rechtecksignalen erzeugen, gibt es prinzipiell zwei Möglichkeiten zur Ermittlung der Fahrtrichtung:
Bei der ersten Möglichkeit wird die Fahrtrichtung nach Tabelle 1 getrennt an Paaren von je zwei Rechtecksignalen ermittelt. Hierbei ist problematisch, dass nicht für alle Paare sofort die korrekte Fahrtrichtung erkannt werden kann. Im Fall von drei Rechtecksignalen, aus denen drei unterschiedliche Paare von Rechtecksignalen gebildet werden können, liefert die Fahrtrichtungserkennung nach Tabelle 1 bei einem Fahrtrichtungswechsel nur für zwei der Paare das korrekte Ergebnis. Durch Durchführung eines Mehrheitsentscheids in einer Auswertelogik (z.B. in einem Mikroprozessor mit SW) kann dennoch die richtige Fahrtrichtung ermittelt werden. Wenn die Auswertung für zwei Paare dieselbe Fahrtrichtung ergibt, handelt es sich zwangsläufig bei dieser um die korrekte Fahrtrichtung.
Bei der zweiten Möglichkeit werden bei einer Flanke eines Rechtecksignals eines ersten Systems die Pegel von mindestens zwei weiteren Systemen ermittelt und daraus die Fahrtrichtung bestimmt. Ab der Verwendung von drei Systemen können Fehler bei der Ermittlung der Fahrtrichtung detektiert werden. Die möglichen Kombinationen aus Pegeln und Flanken sowie die daraus ermittelten Fahrtrichtungen sind in Tabelle 2 gezeigt.

**Tabelle 2:**

| **System 1** | **System 2** | **System 3** | **Fahrtrichtung** |
|---|---|---|---|
| ↑ | 0 | 0 | 0 |
| ↑ | 0 | 1 | Fehler |
| ↑ | 1 | 0 | Fehler |
| ↑ | 1 | 1 | 1 |
| ↓ | 0 | 0 | 1 |
| ↓ | 0 | 1 | Fehler |
| ↓ | 1 | 0 | Fehler |
| ↓ | 1 | 1 | 0 |
| 0 | ↑ | 0 | Fehler |
| 0 | ↑ | 1 | 1 |
| 1 | ↑ | 0 | 0 |
| 1 | ↑ | 1 | Fehler |
| 0 | ↓ | 0 | Fehler |
| 0 | ↓ | 1 | 0 |
| 1 | ↓ | 0 | 1 |
| 1 | ↓ | 1 | Fehler |
| 0 | 0 | ↑ | 1 |
| 0 | 1 | ↑ | Fehler |
| 1 | 0 | ↑ | Fehler |
| 1 | 1 | ↑ | 0 |
| 0 | 0 | ↓ | 0 |
| 0 | 1 | ↓ | Fehler |
| 1 | 0 | ↓ | Fehler |
| 1 | 1 | ↓ | 1 |

| | | | |
|---|---|---|---|
| ↑ steigende Flanke K ↓ fallende Flanke F | | | |
| 0 Low-Pegel 1 High-Pegel | | | |

Mit steigender Anzahl n von Systemen (n>1) steigt die Anzahl der Zeilen der Logiktabelle zur Ermittlung der Fahrtrichtung nach der Formel n * 2ⁿ. Dabei steigt die Anzahl der erkennbaren Fehlerzustände der Systeme des Impulsgebers.

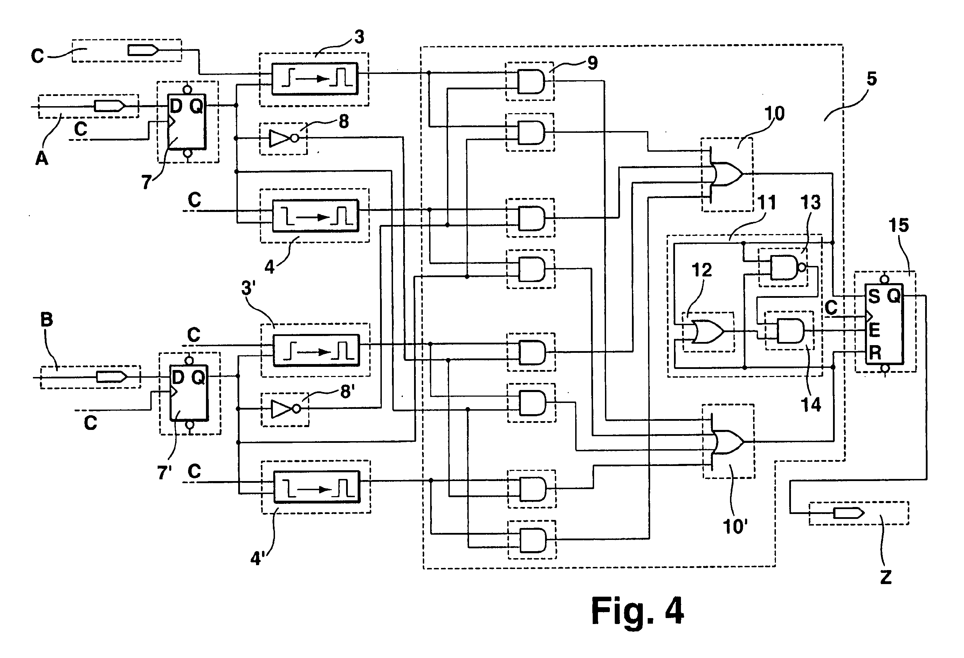

Im Folgenden wird anhand von **Fig. 4** eine Vorrichtung zur Fahrtrichtungserkennung für zwei Systeme beschrieben, welche die Fahrtrichtung aus Pegel und Flankenrichtung mit Hilfe logischer Verknüpfungen wie in Tabelle 1 gezeigt ermittelt.

Die in Fig. 4 gezeigte Vorrichtung weist einen Signaleingang A für ein Rechtecksignal eines ersten Systems sowie einen Signaleingang B für ein Rechtecksignal eines zweiten Systems auf. Ein Takteingang C dient der Taktung der Vorrichtung mit einer wesentlich höheren Taktrate als der Taktrate der Rechtecksignale. Der Takt liegt an allen Einheiten der Vorrichtung von Fig. 4 an, welche eine mit C bezeichnete Eingangsleitung aufweisen. Ein Signalausgang Z liefert den zwei möglichen Zuständen für die Fahrtrichtung ("0" oder "1") entsprechend einen L-Pegel oder H-Pegel, der in einer Auswerteeinrichtung **5** ermittelt wird.

Im Folgenden wird die Ermittlung der Fahrtrichtung für den Fall beschrieben, dass eine Flanke an Systemeingang A anliegt. Entsprechendes gilt für Systemeingang B, wobei in diesem Fall die im Folgenden verwendeten Bezugszeichen durch gestrichene Bezugszeichen zu ersetzen sind, d.h. 7 wird ersetzt durch 7' etc.

Das Rechtecksignal von Systemeingang A liegt am Dateneingang D eines als Signalverarbeitungseinrichtung **7** dienenden D-Flip-Flops an und wird in ein getaktetes Ausgangssignal an dessen Datenausgang Q umgewandelt. Das getaktete Ausgangssignal wird sowohl an einen ersten Pegelerzeuger 3 zur Erzeugung eines H-Pegels bei einer ansteigenden Flanke als auch an einen zweiten Pegelerzeuger **4** zur Erzeugung eines H-Pegels bei einer abfallenden Flanke übertragen. Bei Auftreten einer ansteigenden bzw. einer abfallenden Flanke liegt an den Ausgängen der Pegelerzeuger 3, 4 ein H-Pegel von der Dauer der Taktrate des Takteingangs C an, welcher mit einem Pegel des zweiten Systemeingangs B logisch verknüpft werden kann.

Diese logische Verknüpfung findet in acht als logische Verknüpfungseinheiten **9** dienenden AND-Gattern der Auswerteeinrichtung 5 statt. Hierbei wird das Ausgangssignal von jedem der Pegelerzeuger 3, 4 jeweils mit dem hinter der Signalverarbeitungseinrichtung **7'** vorliegenden Signal des zweiten Signaleingangs B in einer ersten der Verknüpfungseinheiten 9 verknüpft und in einer zweiten der Verknüpfungseinheiten 9 wird das Ausgangssignal jedes der Pegelerzeuger 3, 4 mit dem in einem Inverter **8'** invertierten Signal des zweiten Signaleingangs B verknüpft.

Jede der acht Zeilen der Tabelle 1 ist in der Vorrichtung durch eines der acht als Verknüpfungseinheiten 9 dienenden AND-Gatter realisiert, wobei die Lage der AND-Gatter am Ausgang entweder des ersten Pegelerzeugers 3 oder des zweiten Pegelerzeugers 4 die Information enthält, ob es sich um eine abfallende oder ansteigende Flanke handelt.

Beim Vorliegen einer ansteigenden Flanke wird in einer der beiden Verknüpfungseinheiten 9, welche mit dem Ausgang des ersten Pegelerzeugers 3 verbunden sind, als Ausgangssignal ein H-Pegel erzeugt. Die Ermittlung der Fahrtrichtung aus den Ausgangssignalen der Verknüpfungseinheiten 9 ist deshalb möglich, weil jeder der Verknüpfungseinheiten 9 genau eine Fahrtrichtung zugeordnet ist. Die vier der Verknüpfungseinheiten 9, denen die Fahrtrichtung "1" zugeordnet ist, werden in einer ersten Logikeinheit **10** (OR-Gatter) verknüpft und an einen Set-Eingang **S** eines als binäre Speichereinrichtung **15** dienenden RS-Flip-Flops angelegt. Das Anlegen eines einzigen H-Pegels an das OR-Gatter genügt, um den Speicherzustand der binären Speichereinrichtung 15 am Ausgang Q auf "1" zu setzen. Analog werden die vier der Verknüpfungseinheiten 9, denen die Fahrtrichtung "0" zugeordnet ist, in einer zweiten Logikeinheit **10'** (OR-Gatter) verknüpft, welche mit dem Reset-Eingang **R** der binären Speichereinrichtung 15 in Verbindung steht. Durch einen H-Pegel am Reset-Eingang R wird der Ausgang Q der binären Speichereinrichtung 15 auf L-Pegel gesetzt. Am Ausgang Q der binären Speichereinrichtung 15 liegt somit die als "0" oder "1" binär codierte Fahrtrichtung an. Der Ausgang Q der binären Speichereinrichtung ist mit dem Signalausgang Z der Vorrichtung verbunden, sodass die Fahrtrichtung unmittelbar am Signalausgang Z abgelesen werden kann.

Liegt sowohl am S-Eingang als auch am R-Eingang des RS-Flip-Flops ein H-Pegel an, ist die Fahrtrichtungserkennung fehlerhaft. In diesem Fall verhindert eine Fehlerkorrekturlogik **11,** dass das RS-Flip-Flop einen fehlerhafte Fahrtrichtung speichert, indem am Kontrolleingang E des RS-Flip-Flops ein L-Pegel angelegt wird, wodurch eine Speicherung verhindert wird. Die Fehlerkorrekturlogik 11 weist ein OR-Gatter **12,** ein NAND-Gatter **13** und ein AND-Gatter **14** auf. Das OR-Gatter 12 führt eine OR-Verknüpfung der Ausgänge der Logikeinheiten 10 und 10' durch, das NAND-Gatter 13 eine AND-Verknüpfung mit nachfolgender Inversion (NOT-Verknüpfung).

Liegt an einem oder beiden der Ausgänge der Logikeinheiten 10, 10' ein H-Pegel an, liegt auch am Ausgang des OR-Gatters 12 ein H-Pegel an. Der Ausgang des OR-Gatters 12 ist mit einem von zwei Eingängen des AND-Gatters 14 verbunden. Der zweite Eingang des AND-Gatters 14 steht mit dem Ausgang des NAND-Gatters 13 in Verbindung. Liegt an beiden Ausgängen der Logikeinheiten 10, 10' ein H-Pegel an, liegt am Ausgang des NAND-Gatters 13 ein L-Pegel an, sodass am zweiten Eingang des AND-Gatters 14 ebenfalls ein L-Pegel anliegt. Daher liegt am mit dem Kontrolleingang E der binären Speichereinheit 15 verbundenen Ausgang des AND-Gatters 14 ein L-Pegel an, wodurch eine Speicherung der momentanen Fahrtrichtung in der Speichereinheit 15 verhindert wird.

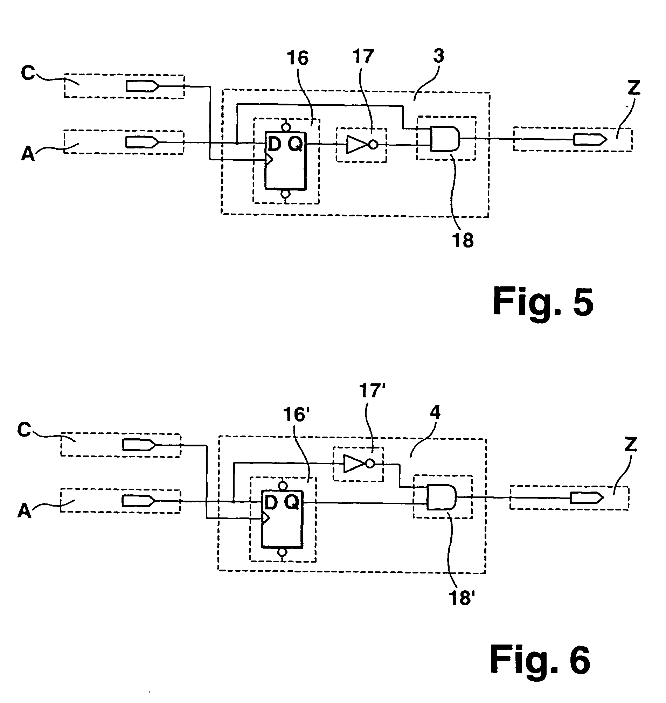

Mögliche Schaltungsanordnungen für die Pegelerzeuger 3 bzw. 4 zur Erzeugung eines H-Pegels aus einer ansteigenden bzw. abfallenden Flanke sind in **Fig. 5** und **Fig. 6** gezeigt.

Fig. 5 zeigt den Pegelerzeuger 3 von Fig. 4, der mit einem Signaleingang A, an dem das Ausgangssignal der Pegelmesseinrichtung 7 anliegt, einem Takteingang C und einem Signalausgang Z verbunden ist. Der Pegelerzeuger besteht aus einem D-Flip-Flop **16,** einem Inverter **17** und einem AND-Gatter **18.** Am Dateneingang D des D-Flip-Flops 16 und an einem der beiden Eingänge des AND-Gatters 18 liegt das Rechtecksignal des Signaleingangs A an. Bei einem Taktsignal des Takteingangs C wird der am Dateneingang D anliegende Pegel im D-Flip-Flop 16 gespeichert und liegt an dessen Ausgang Q an. Ist der Pegel des Rechtecksignals ein L-Pegel, so liegt durch den Invertierer 17 am zweiten Eingang des AND-Gatters 14 ein H-Pegel an, während am ersten Eingang des AND-Gatters 14 weiterhin der L-Pegel anliegt. Nach einer ansteigenden Flanke des Rechtecksignals liegt unmittelbar ein H-Pegel am ersten Eingang des AND-Gatters 18 an, sodass dieses am Ausgang einen H-Pegel liefert, welcher an den Signalausgang Z übertragen wird. Beim nächsten Taktsignal des Takteingangs C liegt am Dateneingang D des D-Flip-Flops 16 ein H-Pegel an, welcher über den Ausgang Q und den Inverter 17 in einen L-Pegel am AND-Gatter 18 übertragen wird. Am Signalausgang Z liegt somit nur für die Zeitspanne eines Takts des Signaleingangs C ein H-Pegel an.

In Fig. 6 ist der Pegelerzeuger 4 von Fig. 4 gezeigt, welcher eine negative Flanke für eine Taktperiode in einen pulsförmigen H-Pegel umsetzt. Der Pegelerzeuger 4 weist dieselben Elektronikkomponenten wie der Pegelerzeuger 3 von Fig. 5 auf. Im Unterschied zu Fig. 5 ist ein Inverter **17'** zwischen Signaleingang A und AND-Gatter **18'** des Pegelerzeugers 4 angeordnet, wodurch bei abfallender Flanke des Rechtecksignals ein H-Pegel am Signalausgang Z erzeugt wird.

Die Vorrichtung von Fig. 4 kann auch beim Vorhandensein von mehr als zwei Systemen mit einer entsprechenden Anzahl von Rechtecksignalen zum Einsatz kommen, indem wie oben beschrieben für jeweils ein Paar von Rechtecksignalen die Fahrtrichtung ermittelt wird. Bei Verwendung von drei Rechtecksignalen werden z.B. drei der Vorrichtungen von Fig. 4 benötigt, an die sich wie oben beschrieben ein Mikroprozessor zur Durchführung eines Mehrheitsentscheids anschließen kann. Die in Fig. 4 gezeigte Vorrichtung kann alternativ auch derart modifiziert werden, dass sie für beispielsweise drei Systeme die Fahrtrichtung aufgrund der in Tabelle 2 gezeigten Logik die Fahrtrichtung ermittelt.

## Patentansprüche

1. Verfahren zur Fahrtrichtungserkennung, bei dem mindestens zwei Rechtecksignale (1, 2; 1', 2') mit zwei Pegeln (H, L) und von der Fahrtrichtung abhängendem Phasenversatz (Φ) erzeugt werden, wobei bei ansteigenden und abfallenden Pulsflanken (K, F) jedes Rechtecksignals (1, 2; 1', 2') der Pegel (H, L) mindestens eines weiteren Rechtecksignals (1, 2; 1', 2') bestimmt wird und aus der Richtung der Pulsflanke (K, F) und dem Pegel (H, L) die momentane Fahrtrichtung ("0", "1") ermittelt wird.

2. Verfahren nach Anspruch 1, **dadurch gekennzeichnet, dass** für einen Phasenversatz (Φ) zwischen zwei Rechtecksignalen (1, 2; 1', 2') in einem Intervall 0°<Φ<180° das Tastverhältnis (T) der Rechtecksignale (1, 2; 1', 2') in einem Intervall Φ/(360°-Φ)< T <(360°- Φ)/Φ liegt.

3. Vorrichtung zur Fahrtrichtungserkennung, insbesondere zur Durchführung des Verfahrens nach Anspruch 1, umfassend:
mindestens zwei Signaleingänge (A, B) für Rechtecksignale (1, 2; 1', 2') mit zwei Pegeln (H; L) und von der Fahrtrichtung abhängendem Phasenversatz (Φ),
eine Signalverarbeitungseinrichtung (7, 7') zur Verarbeitung des Rechtecksignals (1, 2; 1', 2') für jeden Signaleingang (A, B),
jeweils eine Pulsflankenverarbeitungseinrichtung zur Verarbeitung einer ansteigenden und einer abfallenden Pulsflanke (K, F) des Rechtecksignals (1, 2; 1', 2') für jeden Signaleingang (A, B), sowie
eine Auswerteeinrichtung (5) zur Bestimmung der momentanen Fahrtrichtung aus der Richtung der Pulsflanke (K; F) eines Rechtecksignals (1; 1') eines Signaleingangs (A) und dem zum Zeitpunkt der Pulsflanke vorhandenen Pegel (H; L) eines Rechtecksignals (2; 2') mindestens eines weiteren Signaleingangs (B).

4. Vorrichtung nach Anspruch 3, **dadurch gekennzeichnet, dass** die Pulsflankenverarbeitungseinrichtung durch einen Pegelerzeuger (3, 4, 3', 4') gebildet ist, der aus einer abfallenden oder ansteigenden Flanke des Rechtecksignals (1, 2; 1', 2') einen Pegel (H) erzeugt.

5. Vorrichtung nach Anspruch 4, **dadurch gekennzeichnet, dass** die Auswerteeinrichtung (5) für jeden Pegelerzeuger (3, 4, 3', 4') mindestens eine Verknüpfungseinheit (9) umfasst, die den Ausgang des Pegelerzeugers (3, 4, 3', 4') und den Ausgang der Signalverarbeitungseinrichtung (7, 7') mindestens eines weiteren Signaleingangs (A, B) logisch miteinander verknüpft.

6. Vorrichtung nach Anspruch 5, **dadurch gekennzeichnet, dass** zwischen der Signalverarbeitungseinrichtung (7, 7') eines Signaleingangs (A, B) und mindestens einer Verknüpfungseinheit (9) eines Pegelerzeugers (3, 4, 3', 4') mindestens eines weiteren Signaleingangs (B, A) ein Inverter (8, 8') zur Inversion des Pegels (H, L) des Signaleingangs (A, B) angeordnet ist.

7. Vorrichtung nach Anspruch 5, **dadurch gekennzeichnet, dass** jeder Verknüpfungseinheit (9) eine Fahrtrichtung zugeordnet ist, und die Ausgänge der Verknüpfungseinheiten (9), denen dieselbe Fahrtrichtung zugeordnet ist, mit demselben Eingang (S, R) einer binären Speichereinheit (15) verbunden sind.

8. Vorrichtung nach Anspruch 7, **dadurch gekennzeichnet, dass** die Ausgänge der Verknüpfungseinheiten (9), denen dieselbe Fahrtrichtung zugeordnet ist, in einer Logikeinheit (10, 10') logisch verknüpft werden, und der Ausgang der Logikeinheit (10, 10') mit einem Eingang (S, R) der binären Speichereinheit (15) verbunden ist.

9. Vorrichtung nach Anspruch 7, **gekennzeichnet durch** eine Fehlerkorrekturlogik (11), welche mit einem Kontrolleingang (E) der binären Speichereinheit (15) verbunden ist, wobei die Fehlerkorrekturlogik (11) im Fehlerfall eine Speicherung der momentanen Fahrtrichtung in der Speichereinheit (15) verhindert.

10. Vorrichtung nach Anspruch 3, **gekennzeichnet durch** einen Takteingang (C) zur Taktung der Vorrichtung mit einer Taktrate, die wesentlich größer ist als eine Taktrate der Rechtecksignale (1, 2; 1', 2').

## Claims

1. A process for identifying the direction of travel, wherein at least two square-wave signals (1, 2; 1', 2') with two levels (H, L) and with a phase offset (Φ) depending on the direction of travel are generated, wherein at rising and falling pulse edges (K, F) of each square-wave signal (1, 2; 1', 2') the level (H, L) of at least one further square-wave signal (1, 2; 1', 2') is determined, and the instantaneous direction of travel ("0", "1") is ascertained from the direction of the pulse edge (K, F) and from the level (H, L).

2. Process according to Claim 1, **characterised in that** for a phase offset (Φ) between two square-wave signals (1, 2; 1', 2') within an interval 0° < Φ < 180° the pulse duty factor (T) of the square-wave signals (1, 2; 1', 2') lies within an interval Φ/(360°-Φ) < T < (360°-Φ)/Φ.

3. An apparatus for identifying the direction of travel, in particular for implementing the process according to Claim 1, comprising:
at least two signal inputs (A, B) for square-wave signals (1, 2; 1', 2') with two levels (H; L) and with a phase offset (Φ) depending on the direction of travel,
a signal-processing device (7, 7') for processing the square-wave signal (1, 2; 1', 2') for each signal input (A, B),
in each instance a pulse-edge-processing device for processing a rising and a falling pulse edge (K, F) of the square-wave signal (1, 2; 1', 2') for each signal input (A, B) and also
an evaluating device (5) for determining the instantaneous direction of travel from the direction of the pulse edge (K; F) of a square-wave signal (1; 1') of a signal input (A) and from the level (H; L), which is present at the instant of the pulse edge, of a square-wave signal (2; 2') of at least one further signal input (B).

4. Apparatus according to Claim 3, **characterised in that** the pulse-edge-processing device is constituted by a level-generator (3, 4, 3', 4') which generates a level (H) from a falling or rising edge of the square-wave signal (1, 2; 1', 2').

5. Apparatus according to Claim 4, **characterised in that** the evaluating device (5) includes for each level-generator (3, 4, 3', 4') at least one linkage unit (9) which logically links the output of the level-generator (3, 4, 3', 4') and the output of the signal-processing device (7, 7') of at least one further signal input (A, B) with one another.

6. Apparatus according to Claim 5, **characterised in that** an inverter (8, 8') for inverting the level (H, L) of the signal input (A, B) is arranged between the signal-processing device (7, 7') of a signal input (A, B) and at least one linkage unit (9) of a level-generator (3, 4, 3', 4') of at least one further signal input (B, A).

7. Apparatus according to Claim 5, **characterised in that** a direction of travel is assigned to each linkage unit (9), and the outputs of the linkage units (9) to which the same direction of travel is assigned are connected to the same input (S, R) of a binary memory unit (15).

8. Apparatus according to Claim 7, **characterised in that** the outputs of the linkage units (9) to which the same direction of travel is assigned are logically linked in a logic unit (10, 10'), and the output of the logic unit (10, 10') is connected to an input (S, R) of the binary memory unit (15).

9. Apparatus according to Claim 7, **characterised by** an error-correcting logic (11) which is connected to a control input (E) of the binary memory unit (15), whereby in the event of an error the error-correcting logic (11) prevents a storage of the instantaneous direction of travel in the memory unit (15).

10. Apparatus according to Claim 3, **characterised by** a clock input (C) for clocking the apparatus at a clock rate that is significantly higher than a clock rate of the square-wave signals (1, 2, 1', 2').

## Revendications

1. Procédé de reconnaissance de sens de la marche, dans lequel au moins deux signaux rectangulaires (1, 2 ; 1', 2') sont produits avec deux niveaux (h, b) et un décalage de phase dépendant du sens de la marche (0), dans lequel le niveau (h, b) au moins d'un autre signal rectangulaire (1, 2 ; 1', 2') est déterminé en cas de flancs d'impulsion croissants et décroissants (K, F) de chaque signal rectangulaire (1, 2) et le sens de la marche momentané (« 0 », « 1») est détecté à partir de la direction du flanc d'impulsion (K, F) et du niveau (h, b).

2. Procédé selon la revendication 1, **caractérisé en ce que** le facteur d'utilisation des impulsions (T) des signaux rectangulaires (1, 2 ; 1', 2') se situe dans un intervalle C1)/(360°-Φ) < T < (360°- Φ)/Φ) pour un décalage de phase (Φ) entre deux signaux rectangulaires (1, 2 ; 1', 2') dans un intervalle 0°< Φ <180°.

3. Dispositif de détection de sens de la marche, notamment pour réaliser le procédé selon la revendication 1, comprenant :
au moins deux entrées de signal (a, b) pour des signaux rectangulaires (1, 2 ; 1', 2') avec deux niveaux (h ; b) et un décalage de phase (Φ) dépendant du sens de la marche,
un dispositif de traitement de signaux (7, 7') destiné à traiter le signal rectangulaire (1, 2 ; 1', 2') pour chaque entrée de signal (A, B), respectivement un dispositif de traitement de flanc d'impulsion destiné à traiter un flanc d'impulsion croissant et décroissant (K, F) du signal rectangulaire (1, 2 ; 1', 2') pour chaque entrée de signal (A, B), et un système d'évaluation (5) destiné à détecter le sens de la marche momentané à partir de la direction du flanc d'impulsion (k ; F) d'un signal rectangulaire (1 ; 1') d'une entrée de signal (a) et le niveau (h, b) existant au moment du flanc d'impulsion d'un signal rectangulaire (2 ; 2') au moins d'une autre entrée de signal (B).

4. Dispositif selon la revendication 3, **caractérisé en ce que** le dispositif de traitement de flanc d'impulsion est formé par un générateur de niveau (3, 4, 3', 4') qui produit un niveau (h) à partir d'un flanc décroissant ou croissant du signal rectangulaire (1, 2 ; 1', 2').

5. Dispositif selon la revendication 4, **caractérisé en ce que** le système d'évaluation (5) pour chaque générateur de niveau (3, 4, 3', 4') comprend au moins une unité de liaison (9) qui lie logiquement ensemble la sortie du générateur de niveau (3, 4, 3', 4') et la sortie du dispositif de traitement de signaux (7, 7') au moins d'une autre entrée de signal (A, B).

6. Dispositif selon la revendication 5, **caractérisé en ce qu'**un inverseur (8, 8') destiné à inverser le niveau (h, b) de l'entrée de signal (A, B) est disposé entre le dispositif de traitement de signaux (7, 7 ') d'une entrée de signal (a, b) et au moins une unité de liaison (9) d'un générateur de niveau (3, 4, 3', 4') au moins d'une autre entrée de signal (B, A).

7. Dispositif selon la revendication 5, **caractérisé en ce qu'**un sens de la marche est affecté à chaque unité de liaison (9), et les sorties des unités de liaison (9) auxquelles le même sens de la marche est affecté, sont reliées à la même entrée (S, R) d'une unité de mémorisation binaire (15).

8. Dispositif selon la revendication 7, **caractérisé en ce que** les sorties des unités de liaison (9) auxquelles le même sens de la marche est affecté sont liées logiquement dans une unité logique (10, 10'), et la sortie de l'unité logique (10, 10') est reliée à une entrée (S, R) de l'unité de mémorisation binaire (15).

9. Dispositif selon la revendication 7, **caractérisé en ce qu'**une unité logique de correction des erreurs (11), qui est reliée à une entrée de contrôle (E) de l'unité de mémorisation binaire (15), dans lequel l'unité logique de correction des erreurs (11), empêche une mémorisation du sens de la marche momentané dans l'unité de mémorisation (15) en cas d'erreur.

10. Dispositif selon la revendication 3, **caractérisé en ce qu'**une entrée d'horloge (c) synchronise le dispositif avec un taux de synchronisation qui est sensiblement plus grand qu'un taux de synchronisation des signaux rectangulaires (1, 2 ; 1', 2').
